Europäisches Patentamt

European Patent Office

Office européen des brevets

(19)

(11) **EP 1 114 398 B1**

(12) **EUROPÄISCHE PATENTSCHRIFT**

(45) Veröffentlichungstag und Bekanntmachung des Hinweises auf die Patenterteilung:
**17.12.2003   Patentblatt 2003/51**

(51) Int Cl.$^7$: **G06N 3/04**

(21) Anmeldenummer: **99944234.6**

(22) Anmeldetag: **01.07.1999**

(86) Internationale Anmeldenummer:
**PCT/DE99/01949**

(87) Internationale Veröffentlichungsnummer:
**WO 0001/1601 (02.03.2000 Gazette 2000/09)**

(54) **VERFAHREN ZUM TRAINIEREN EINES NEURONALEN NETZES, VERFAHREN ZUR KLASSIFIKATION EINER FOLGE VON EINGANGSGRÖSSEN UNTER VERWENDUNG EINES NEURONALEN NETZES, NEURONALES NETZ UND ANORDNUNG ZUM TRAINIEREN EINES NEURONALEN NETZES**

METHOD FOR TRAINING A NEURAL NETWORK, METHOD FOR CLASSIFYING A SEQUENCE OF INPUT PARAMETERS USING A NEURAL NETWORK, NEURAL NETWORK AND ARRAY FOR TRAINING A NEURAL NETWORK

PROCEDE POUR ENTRAINER UN RESEAU NEURONAL, PROCEDE DE CLASSIFICATION D'UNE SEQUENCE DE GRANDEURS D'ENTREE AU MOYEN D'UN RESEAU NEURONAL, RESEAU NEURONAL ET DISPOSITIF POUR L'ENTRAINEMENT D'UN RESEAU NEURONAL

(84) Benannte Vertragsstaaten:
**AT BE CH CY DE DK ES FI FR GB GR IE IT LI LU MC NL PT SE**

(30) Priorität: **25.08.1998   DE 19838654**

(43) Veröffentlichungstag der Anmeldung:
**11.07.2001   Patentblatt 2001/28**

(73) Patentinhaber: **SIEMENS AKTIENGESELLSCHAFT**
**80333 München (DE)**

(72) Erfinder:
• **DECO, Gustavo**
  **D-85579 Neubiberg (DE)**
• **SCHÜRMANN, Bernd**
  **D-85778 Haimhausen (DE)**

(56) Entgegenhaltungen:
**US-A- 5 630 023          US-A- 5 675 504**

• SURKAN A J ET AL: "Prediction by neural network methods compared for energy control problems" PROCEEDINGS OF THE AMERICAN POWER CONFERENCE. 58TH ANNUAL MEETING 1996. TECHNOLOGY FOR COMPETITION AND GLOBALIZATION, PROCEEDINGS OF 58TH AMERICAN POWER CONFERENCE ANNUAL MEETING, CHICAGO, IL, USA, 9-11 APRIL 1996, Seiten 231-236 vol.1, XP000879471 1996, Chicago, IL, USA, Illinois Inst. Technol, USA

• GIA-SHUH JANG ET AL: "Intelligent stock trading system with price trend prediction and reversal recognition using dual-module neural networks" APPLIED INTELLIGENCE: THE INTERNATIONAL JOURNAL OF ARTIFICIAL INTELLIGENCE, NEURAL NETWORKS, AND COMPLEX PROBLEM-SOLVING TECHNOLOGIES, SEPT. 1993, NETHERLANDS, Bd. 3, Nr. 3, Seiten 225-248, XP000878752 ISSN: 0924-669X

EP 1 114 398 B1

- **ZEBULUM R S ET AL: "Short-term load forecasting using neural nets" FROM NATURAL TO ARTIFICIAL NEURAL COMPUTATION. INTERNATIONAL WORKSHOP ON ARTIFICIAL NEURAL NETWORKS. PROCEEDINGS, PROCEEDINGS OF IWANN 95. INTERNATIONAL WORKSHOP ON ARTIFICIAL NEURAL NETWORKS, MALAGA-TORREMOLINOS, SPAIN, 7-9 JUNE 1995, Seiten 1001-1008, XP000878823 1995, Berlin, Germany, Springer-Verlag, Germany ISBN: 3-540-59497-3**

**Beschreibung**

Die Erfindung betrifft ein Verfahren zum Trainieren eines neuronalen Netzes, ein Verfahren zur Klassifikation einer Folge von Eingangsgrößen unter Verwendung eines neuronalen Netzes sowie ein neuronales Netz und eine Anordnung zum Trainieren eines neuronalen Netzes.

Ein neuronales Netz weist Neuronen auf, die zumindest teilweise miteinander verbunden sind. Eingangsneuronen des neuronalen Netzes werden Eingangssignale als Eingangsgrößen den Eingangsneuronen zugeführt. Das neuronale Netz weist üblicherweise mehrere Schichten auf. Abhängig von einem Neuron des neuronalen Netzes zugeführten Eingangsgrößen und einer für das Neuron vorgesehenen Aktivierungsfunktion generiert jeweils ein Neuron ein Signal, welches wiederum Neuronen einer weiteren Schicht als Eingangsgröße gemäß einer vorgebbaren Gewichtung zugeführt wird. In einer Ausgangsschicht wird in einem Ausgangsneuron eine Ausgangsgröße abhängig von Größen, die dem Ausgangsneuron von Neuronen der vorangegangenen Schicht zugeführt werden, generiert. Es existieren derzeit im wesentlichen zwei Ansätze hinsichtlich der Frage, in welcher Form Information in einem neuronalen Netz gespeichert ist.

Ein erster Ansatz geht davon aus, daß die Information in einem Neuronalen Netz im Spektralbereich codiert ist. Bei diesem Ansatz wird eine zeitliche Folge von Eingangsgrößen derart codiert, daß für jeden Zeitreihenwert einer zeitlichen Folge der Eingangsgrößen jeweils ein Eingangsneuron vorgesehen ist, an welches Eingangsneuron der jeweilige Zeitreihenwert gelegt wird.

Bei einem neuronalen Netz, welches gemäß diesem Ansatz ausgestaltet ist, wird üblicherweise als Aktivierungsfunktion eine tangens hyperbolicus (tanh) -Funktion verwendet.

Diese erste Art eines neuronalen Netzes wird im weiteren als statisches neuronales Netz bezeichnet.

Nachteilig an diesem Ansatz ist insbesondere, daß es mit einem statischen neuronalen Netz nicht möglich ist, eine Dynamik eines Prozesses, welchem Prozeß ein technisches System unterliegt, explizit bei der internen Codierung der Folge von Eingangsgrößen zu berücksichtigen.

Die aus [4] bekannten Time-Delay-Neural-Networks (TDNN) versuchen diesem Nachteil dadurch zu begegnen, daß bei einer Mehrzahl von Folgen von Eingangsgrößen für jede Folge und für jeden Zeitreihenwert jeweils ein Eingangsneuron vorgesehen ist. Dieser Ansatz weist insbesondere den Nachteil auf, daß die Dimension des Eingaberaums, repräsentiert durch die Anzahl von Eingangsneuronen, mit wachsender Anzahl zu berücksichtigender unterschiedlicher Folgen von Eingangsgrößen exponentiell wächst.

Mit steigender Anzahl von Neuronen in dem neuronalen Netz ist ferner ein erhöhter Trainingsaufwand unter Verwendung einer mit steigender Anzahl Neuronen steigender Anzahl benötigter Trainingsdaten verbunden. Damit wird ein Trainieren eines statischen neuronalen Netzes unter diesen Bedingungen sehr rechenaufwendig bzw. praktisch nicht mehr durchführbar.

Zum Trainieren eines statischen neuronalen Netzes wird üblicherweise ein gradientenbasiertes Trainingsverfahren beispielsweise das Back-Propagation-Verfahren eingesetzt.

Aus [3] ist ferner für ein statisches neuronales Netz ein Trainingsverfahren bekannt, welches als ALOPEX-Verfahren bezeichnet wird. Bei diesem Verfahren wird das Lernen eines statischen neuronalen Netzes als ein Optimierungsproblem betrachtet. Ziel der Optimierung ist in diesem Fall die Minimierung eines Fehlermaßes E unter Berücksichtigung von in dem statischen neuronalen Netz vorhandenen Gewichte, mit denen die Verbindungen zwischen Neuronen gewichtet sind, für einen vorgegebenen Trainingsdatensatz mit Trainingsdaten.

Ein Trainingsdatum ist ein Tupel, welches Eingangsgrößen, beispielsweise Zustandsgrößen eines technischen Systems bzw. Rahmenbedingungen, denen ein technisches System unterliegt, die einem technischen System zugeführt werden, sowie eine unter den Rahmenbedingungen ermittelte Ausgangsgröße, die von dem technischen System zu den Eingangsgrößen gebildet wird.

Das ALOPEX-Verfahren wird im weiteren im Zusammenhang mit dem Ausführungsbeispiel näher erläutert.

Ein zweiter Ansatz ist darin zu sehen, daß die Information über ein System in dem Zeitbereich und in dem Spektralbereich codiert ist. Ein künstliches neuronales Netz, welches diesem Ansatz Rechnung trägt, weist sogenannte gepulste Neuronen auf und ist aus [2] bekannt.

Ein gepulstes Neuron wird gemäß [1] derart modelliert, daß das Verhalten eines gepulsten Neurons hinsichtlich einer externen Stimulierung, die im weiteren als Eingangsgröße bezeichnet wird, durch eine stochastische Differentialgleichung des Itö-Typs gemäß folgender Vorschrift beschrieben wird:

$$dV(t) = \left( -\frac{V(t)}{\tau} + \mu \right) dt + \sigma dW(t) + w dS(t). \qquad (1)$$

In der Vorschrift (1) wird mit dW(t) ein Standard-Wiener-Prozeß bezeichnet. Eine vorgegebene Konstante $\tau$

beschreibt eine Verzögerung eines Membranpotentials V(t) des modellierten Neurons ohne Eingangsgröße, die an dem Neuron anliegt. Durch das Modell wird ein biologisches Neuron in seinem Verhalten nachgebildet. Aus diesem Grund wird ein gepulstes Neuron auch als biologisch orientiertes Neuron bezeichnet.

Ferner wird mit S(t) eine Kopplung des Neurons mit einem anderen Neuron bezeichnet, d.h. es gilt:

$$s(t) = \frac{d}{dt} S(t) = \sum_i \delta(t - t_i), \tag{2}$$

wobei mit $t_i$ eine Ankommzeit bezeichnet wird, zu der ein externer Impuls an einem Eingang eines Neurons ankommt. Eine soma-synaptische Stärke wird durch eine synaptische Größe w modelliert.

In diesem Modell wird von dem gepulsten Neuron ein Impuls generiert, wenn das Membranpotential V(t) einen vorgegebenen Schwellenwert $\Theta$ erreicht. Nach Generierung des Impulses wird das Membranpotential V(t) des Neurons auf einen vorgegebenen Initialisierungs-Potentialwert V(0) zurückgesetzt.

Eine zeitliche Folge von Impulsen wird somit gemäß folgender Vorschrift beschrieben:

$$t_0', \ldots, t_k', \ldots, \tag{3}$$

und genügt folgender Vorschrift:

$$o(t) = \sum_k \delta\left(t - t_k'\right). \tag{4}$$

Ferner ist aus [1] bekannt, daß unter der Annahme des oben beschriebenen Modells für ein gepulstes Neuron ein Unterscheidungswert I(T) gebildet werden kann, mit dem angegeben wird, mit welcher Verläßlichkeit eine Folge von Eingangsgrößen korrekt klassifiziert wird hinsichtlich der für ein Training des neuronalen Netzes verwendeten Trainingsdaten.

Der Unterscheidungswert I(T) ist abhängig von Impulsen, die von den gepulsten Neuronen innerhalb eines Zeitraums [0; T] gebildet werden sowie von einer Trainings-Folge von Eingangsgrößen, die dem neuronalen Netz zugeführt werden. Der Unterscheidungswert I(T) genügt folgender Vorschrift:

$$I(T) = I\left(s; \begin{Bmatrix} t_1^{(1)}, \ldots, t_m^{(1)}, \ldots, t_{k_1}^{(1)}, t_1^{(2)}, \ldots, t_m^{(2)}, \ldots, t_{k_2}^{(2)}, \ldots, \\ t_1^{(n)}, \ldots, t_m^{(n)}, \ldots, t_{k_n}^{(n)}, \ldots, t_1^{(N)}, \ldots, t_m^{(N)}, \ldots, t_{k_N}^{(N)} \end{Bmatrix}\right), \tag{5}$$

wobei mit

- s die Eingangsgrößen bezeichnet werden,
- 
$$t_m^{(n)}$$

    ein Impuls bezeichnet wird, der von einem gepulsten Neuron n zu einem Zeitpunkt m innerhalb eines Zeitraums [0, T] generiert wird,
- mit $k_n$ (n = 1, ..., N) ein Zeitpunkt bezeichnet wird, zu dem das gepulste Neuron n den innerhalb des Zeitraums [0, T] letzten Impuls generiert hat,
- N eine Anzahl in dem Neuronalen Netz enthaltener gepulster Neuronen bezeichnet wird.

Für ein Neuronales Netz mit einer Mehrzahl von N Neuronen ergibt sich eine stochastische Differentialgleichung des Itö-Typs gemäß folgender Vorschrift beschrieben wird:

$$
dV_i(t) = \left( -\frac{V_i(t)}{\tau} + \mu \right) dt + \sigma d\tilde{W}_i(t) +
$$

$$
+ \sum_{j=1}^{N} w_{ij} \sum_{k} \delta\left( t - t_{k-\Delta_{ij}}^{(j)} \right) dt + I_i(t) dt \tag{6}
$$

wobei mit

- $V_i(t)$ ein Membranpotential des i-ten Neurons bezeichnet wird (i = 1, ... , N),
- N eine Anzahl in dem Neuronalen Netz enthaltener Neuronen bezeichnet wird,
- $w_{ij}$ jeweils ein Gewicht einer Kopplung zwischen dem i-ten und dem j-ten Neuron bezeichnet wird, anschaulich eine synaptische Stärke zwischen den Neuronen i und j,
- $\Delta_{ij}$ eine vorgebbare axionale Verzögerungszeit eines Signals zwischen den Neuronen i und j bezeichnet wird,
- $I_i(t)$ ein externes Stimulierungssignal des Neurons i bezeichnet wird.

Aus [4] ist ein Trainingsverfahren für ein neuronales Netz bekannt. Bei diesem Verfahren wird das neuronale Netz mit dem Modell eines technischen Systems in einen Regelkreis derart eingebunden, daß das neuronale Netz als Ausgangsgröße mindestens eine Stellgröße an das Modell abgibt und das Modell aus der vom Neuronalnetz zugeführten Stellgröße mindestens eine Regelgröße erzeugt, die dem neuronalen Netz als Eingangsgröße zugeführt wird. Die Stellgröße wird mit einem Rauschen von bekannter Rauschverteilung überlagert, bevor sie dem Modell zugeführt wird. Die Gewichte des neuronalen Netzes werden in Reaktion auf die durch das aufgeprägte Rauschen veränderte Regelgröße wie folgt eingestellt: Es wird von einer Kostenfunktion bewertet, ob die Gewichtsänderung am Netz eine Verbesserung der Regelgröße in Bezug auf ein Sollverhalten des Modells bewirkt hat und solche Gewichtseinstellungen werden durch die Kostenfunktion begünstigt.

Aus [5] ist ein Trainingsverfahren für ein neuronales Netz mit Back-Propagation bekannt. Als optimal trainiertes neuronales Netz wird das neuronale Netz ausgewählt, welches mit dem Trainingsdatensatz trainiert wurde, der den kleinsten durchschnittlichen quadratischen Fehler (RMSE) erzeugte. Bei dem iterativen Trainingsverfahren kann die Größe des Trainingsdatensatzes entweder vergrößert oder verkleinert werden.

Der Erfindung liegt das Problem zugrunde, ein Verfahren sowie eine Anordnung zum Trainieren eines neuronalen Netzes mit gepulsten Neuronen anzugeben. Ferner liegt der Erfindung das Problem zugrunde, ein Verfahren zur Klassifikation einer Folge von Eingangsgrößen unter Verwendung eines neuronalen Netzes mit gepulsten Neuronen sowie ein neuronales Netz mit gepulsten Neuronen anzugeben.

Die Probleme werden durch die Verfahren und die Anordnung sowie durch das neuronale Netz mit den Merkmalen der unabhängigen Patentansprüche gelöst.

Ein Verfahren zum Trainieren eines neuronalen Netzes, welches gepulste Neuronen enthält, weist folgende Schritte auf:

a) für einen ersten Zeitraum wird das neuronale Netz derart trainiert, daß ein Unterscheidungswert maximiert wird, wodurch ein maximaler erster Unterscheidungswert gebildet wird,
b) der Unterscheidungswert ist abhängig von Impulsen, die von den gepulsten Neuronen innerhalb des ersten Zeitraums gebildet werden sowie von einer Trainings-Folge von Eingangsgrößen, die dem neuronalen Netz zugeführt werden,
c) iterativ werden folgende Schritte durchgeführt:

- der erste Zeitraum wird zu einem zweiten Zeitraum verkürzt,
- für den zweiten Zeitraum wird ein zweiter Unterscheidungswert gebildet,
- ist der zweite Unterscheidungswert gleich dem ersten Unterscheidungswert, so erfolgt eine neue Iteration mit einem neuen zweiten Zeitraum, der durch Verkürzung des zweiten Zeitraums der vorangegangenen Iteration gebildet wird,
- sonst wird das Verfahren beendet und das trainierte neuronale Netz ist das neuronale Netz der letzten Iteration, bei der der zweite Unterscheidungswert gleich dem ersten Unterscheidungswert ist.

Ein Verfahren zur Klassifikation einer Folge von Eingangsgrößen unter Verwendung eines neuronalen Netzes, welches gepulste Neuronen enthält und gemäß folgenden Schritten trainiert worden ist, weist folgende Schritte auf:

a) für einen ersten Zeitraum wird das neuronale Netz derart trainiert, daß ein Unterscheidungswert maximiert wird, wodurch ein maximaler erster Unterscheidungswert gebildet wird,
b) der Unterscheidungswert ist abhängig von Impulsen, die von den gepulsten Neuronen innerhalb des ersten Zeitraums gebildet werden sowie von einer Trainings-Folge von Eingangsgrößen, die dem neuronalen Netz zugeführt werden,
c) iterativ werden folgende Schritte durchgeführt:

-   der erste Zeitraum wird zu einem zweiten Zeitraum verkürzt,
-   für den zweiten Zeitraum wird ein zweiter Unterscheidungswert gebildet,
-   ist der zweite Unterscheidungswert gleich dem ersten Unterscheidungswert, so erfolgt eine neue Iteration mit einem neuen zweiten Zeitraum, der durch Verkürzung des zweiten Zeitraums der vorangegangen Iteration gebildet wird,
-   sonst wird das Verfahren beendet und das trainierte neuronale Netz ist das neuronale Netz der letzten Iteration, bei der der zweite Unterscheidungswert gleich dem ersten Unterscheidungswert ist,
-   die Folge von Eingangsgrößen wird dem neuronalen Netz zugeführt,

d) ein Klassifikationssignal wird gebildet, mit dem angegeben wird, welcher Art einer Folge von Eingangsgrößen die zugeführte Folge ist.

Ein neuronales Netz, welches gepulste Neuronen enthält, ist gemäß folgenden Schritten trainiert worden:

a) für einen ersten Zeitraum wird das neuronale Netz derart trainiert, daß ein Unterscheidungswert maximiert wird, wodurch ein maximaler erster Unterscheidungswert gebildet wird,
b) der Unterscheidungswert ist abhängig von Impulsen, die von den gepulsten Neuronen innerhalb des ersten Zeitraums gebildet werden sowie von einer Trainings-Folge von Eingangsgrößen, die dem neuronalen Netz zugeführt werden,
c) iterativ werden folgende Schritte durchgeführt:

-   der erste Zeitraum wird zu einem zweiten Zeitraum verkürzt,
-   für den zweiten Zeitraum wird ein zweiter Unterscheidungswert gebildet,
-   ist der zweite Unterscheidungswert gleich dem ersten Unterscheidungswert, so erfolgt eine neue Iteration mit einem neuen zweiten Zeitraum, der durch Verkürzung des zweiten Zeitraums der vorangegangen Iteration gebildet wird,
-   sonst wird das Verfahren beendet und das trainierte neuronale Netz ist das neuronale Netz der letzten Iteration, bei der der zweite Unterscheidungswert gleich dem ersten Unterscheidungswert ist.

Eine Anordnung zum Trainieren eines neuronalen Netzes, welches gepulste Neuronen enthält, weist einen Prozessor auf, der derart eingerichtet ist, daß folgende Schritte durchführbar sind:

a) für einen ersten Zeitraum wird das neuronale Netz derart trainiert, daß ein Unterscheidungswert maximiert wird, wodurch ein maximaler erster Unterscheidungswert gebildet wird,
b) der Unterscheidungswert ist abhängig von Impulsen, die von den gepulsten Neuronen innerhalb des ersten Zeitraums gebildet werden sowie von einer Trainings-Folge von Eingangsgrößen, die dem neuronalen Netz zugeführt werden,
c) iterativ werden folgende Schritte durchgeführt:

-   der erste Zeitraum wird zu einem zweiten Zeitraum verkürzt,
-   für den zweiten Zeitraum wird ein zweiter Unterscheidungswert gebildet,
-   ist der zweite Unterscheidungswert gleich dem ersten Unterscheidungswert, so erfolgt eine neue Iteration mit einem neuen zweiten Zeitraum, der durch Verkürzung des zweiten Zeitraums der vorangegangenen Iteration gebildet wird,
-   sonst wird das Verfahren beendet und das trainierte neuronale Netz ist das neuronale Netz der letzten Iteration, bei der der zweite Unterscheidungswert gleich dem ersten Unterscheidungswert ist.

Durch die Erfindung wird es möglich, mittels eines neuronalen Netzes, welches gepulste Neuronen enthält, eine zeitliche Folge von Eingangsgrößen zu klassifizieren, wobei gewährleistet ist, daß bei optimierter Klassifikationssicherheit eine minimierte Anzahl von Zeitwerten dem neuronalen Netz zur Klassifikation zugeführt werden müssen.

Bevorzugte Weiterbildungen der Erfindung ergeben sich aus den abhängigen Ansprüchen.

Bevorzugt wird zur Maximierung des ersten Unterscheidungswerts und/oder des zweiten Unterscheidungswerts ein nicht gradientenbasiertes Optimierungsverfahren eingesetzt, bevorzugt ein auf dem ALOPEX-Verfahren basierendes Optimierungsverfahren.

Der erste Unterscheidungswert genügt vorzugsweise folgender Vorschrift:

$$
I(T) = I\left(s; \left\{ \begin{matrix} t_1^{(1)}, \ldots, t_m^{(1)}, \ldots, t_{k_1}^{(1)}, t_1^{(2)}, \ldots, t_m^{(2)}, \ldots, t_{k_2}^{(2)}, \ldots, \\ t_1^{(n)}, \ldots, t_m^{(n)}, \ldots, t_{k_n}^{(n)}, \ldots, t_1^{(N)}, \ldots, t_m^{(N)}, \ldots, t_{k_N}^{(N)} \end{matrix} \right\} \right), \quad (7)
$$

wobei mit

- s die Eingangsgrößen bezeichnet werden,
- $$t_m^{(n)}$$

  ein Impuls bezeichnet wird, der von einem gepulsten Neuron n zu einem Zeitpunkt m innerhalb eines Zeitraums [0, T] generiert wird,
- mit $k_n$ (n = 1, ..., N) ein Zeitpunkt bezeichnet wird, zu dem das gepulste Neuron n den innerhalb des Zeitraums [0, T] letzten Impuls generiert hat,
- N eine Anzahl in dem Neuronalen Netz enthaltener gepulster Neuronen bezeichnet wird.

In einer weiteren Ausgestaltung genügt der erste Unterscheidungswert folgender Vorschrift

$$
I(T) = -\int p(out) \cdot \ln\big(p(out)\big) dt_1^{(1)} \ldots dt_{k_1}^{(1)} \ldots dt_{k_N}^{(N)} +
$$
$$
+ \sum_{j=1}^{s} p_j \int p\left(out\middle| s^{(j)}\right) \cdot \ln\left(p\left(out\middle| s^{(j)}\right)\right) dt_1^{(1)} \ldots dt_{k_1}^{(1)} \ldots dt_{k_N}^{(N)} \quad (8)
$$

mit

$$
p(out) = \sum_{j=1}^{s} p_j p\left(out\middle| s^{(j)}\right), \quad (9)
$$

wobei mit

- $s^{(j)}$ eine Eingangsgröße bezeichnet wird, die an das Neuronale Netz zu einem Zeitpunkt j angelegt wird,
- $p_j$ eine Wahrscheinlichkeit dafür bezeichnet wird, daß zu einem Zeitpunkt j die Eingangsgröße $s^{(j)}$ an das Neuronale Netz angelegt wird,
- $$p\left(out\middle| s^{(j)}\right)$$

  eine bedingte Wahrscheinlichkeit dafür bezeichnet wird, ein Impuls von einem gepulsten Neuron in dem Neuronalen Netz generiert wird unter der Bedingung, daß zu einem Zeitpunkt j die Eingangsgröße $s_{(j)}$ an das Neuronale

Netz angelegt wird.

Die Trainings-Folgen von Eingangsgrößen sind bevorzugt gemessene physikalische Signale.

Somit sind die Verfahren und die Anordnungen im Rahmen der Beschreibung eines technischen Systems, insbesondere zur Beschreibung bzw. Untersuchung eines mehrkanaligen Signals, welches durch einen Elektroencephalographen aufgenommen worden ist und ein Elektroencephalogramm beschreibt, einsetzbar.

Die Verfahren und die Anordnungen können ferner zur Analyse multivarianter Finanzdaten in einem Finanzmarkt zur Analyse ökonomischer Zusammenhänge eingesetzt werden.

Die beschriebenen Verfahrensschritte können sowohl in Software für den Prozessor als auch in Hardware, d.h. mittels einer Spezialschaltung, realisiert werden.

Ein Ausführungsbeispiel der Erfindung ist in den Figuren dargestellt und wird im weiteren näher erläutert.

Es zeigen

Figur 1    ein Ablaufdiagramm, indem die einzelnen Verfahrensschritte des Ausführungsbeispiels dargestellt sind;

Figur 2    eine Skizze eines Elektroencephalographen und einem Patienten für den ein Elektroencephalogramm erstellt wird;

Figur 3    eine Skizze eines neuronalen Netzes gemäß dem Ausführungsbeispiel;

Figur 4    eine Skizze, anhand der das Prinzip, welches dem Ausführungsbeispiel zugrunde liegt, dargestellt wird.

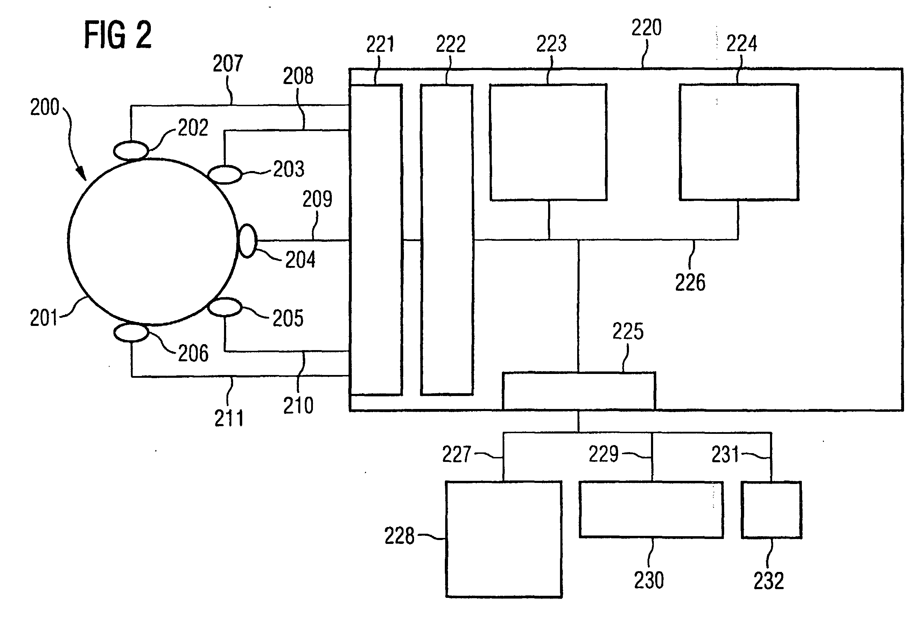

**Fig.2** zeigt einen Patienten 200, an dessen Kopf 201 Sensoren 202, 203, 204, 205 und 206 angebracht sind zur Aufnahme von Gehirnstömen. Von den Sensoren 202, 203, 204, 205, 206 aufgenommene elektrische Signale 207, 208, 209, 210 und 211 werden einem Elektroencephalographen 220 über eine erste Eingangs-/Ausgangsschnittstelle 221 zugeführt. Der Elektroencephalograph 220 weist mehrere Eingangskanäle auf. Über die Eingangs-/Ausgangsschnittstelle 221, die mit einem Analog-/Digital-Wandler 222 verbunden ist, werden die elektrischen Signale dem Elektroencephalographen 220 zugeführt und in dem Analog-/Digital-Wandler 222 digitalisiert und jedes aufgenommene elektrische Signal wird als eine Folge von Zeitreihenwerten in einem Speicher 223 gespeichert.

Somit ist eine Folge von Zeitreihenwerten durch ein Abtastintervall sowie durch eine Zeitdauer, im weiteren als Zeitraum bezeichnet, charakterisiert, während der jeweils ein elektrisches Signal aufgenommen wird. Der Speicher 223 ist mit dem Analog-/Digital-Wandler 222 sowie mit einem Prozessor 224 und einer zweiten Eingangs-/Ausgangsschnittstelle 225 über einen Bus 226 verbunden.

Mit der zweiten Eingangs-/Ausgangsschnittstelle 225 ist ferner über ein erstes Kabel 227 ein Bildschirm 228, über ein zweites Kabel 229 eine Tastatur 230 und über ein drittes Kabel 231 eine Computermaus 232 verbunden.

Auf dem Bildschirm 228 werden Ergebnisse der Untersuchung des Patienten 200 dargestellt. Über die Tastatur 230 bzw. die Computermaus 232 können von einem Benutzer (nicht dargestellt) Eingaben in das System erfolgen.

Der Prozessor 224 ist derart eingerichtet, daß die im weiteren beschriebenen Verfahrensschritte durchführbar sind.

Jeweils eine Folge von Zeitreihenwerten sowie eine Angabe, welcher Klasse von Zeitreihenwerten die Folge von Zeitreihenwerten zuzuordnen ist, bilden ein Trainingsdatum.

Eine Vielzahl von Trainingsdaten bilden einen Trainingsdatensatz, mit dem ein im weiteren beschriebenes neuronales Netz 301 trainiert wird.

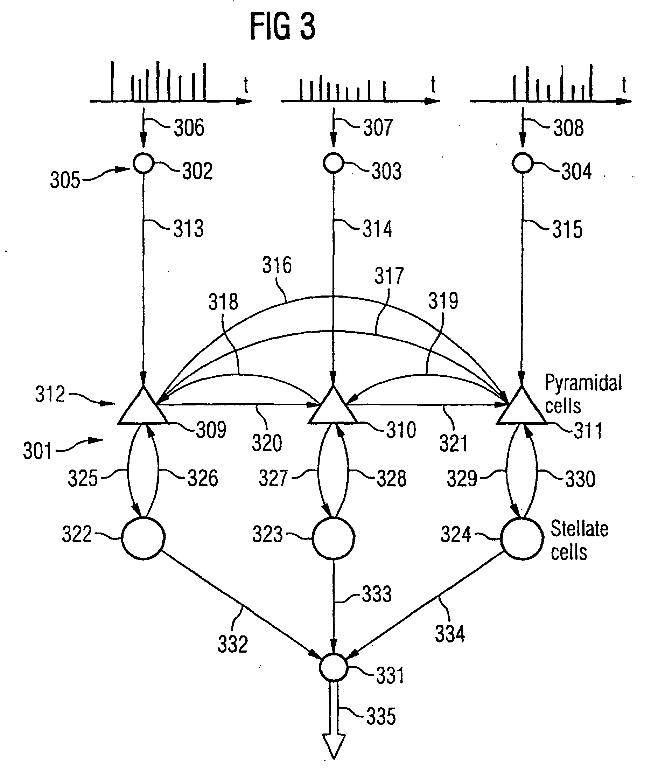

**Fig.3** zeigt das neuronale Netz 301 mit gepulsten Neuronen.

An jeweils ein Eingangsneuron 302, 303, 304 einer Eingangsschicht 305 wird jeweils eine Folge 306, 307, 308 von Zeitreihenwerten angelegt. Jeder angelegter Folge 306, 307, 308 von Zeitreihenwerten ist im Rahmen des Trainingsverfahrens eine Angabe zugeordnet, ob es sich bei dieser Folge 306, 307, 308 der Zeitreihenwerte, im weiten als Eingabemuster 306, 307, 308 bezeichnet, um ein Eingabemuster 306, 307, 308 einer ersten Klasse oder um ein Eingabemuster 306, 307, 308 einer zweiten Klasse handelt.

Jeweils ein Eingangsneuron 302, 303, 304 ist mit einem Zwischenneuron 309, 310, 311 einer Zwischenschicht 312 jeweils über eine gewichtete Verbindung 313, 314, 315 verbunden.

Die Zwischenneuronen 309, 310, 311 sind miteinander über Verbindungen 316, 317, 318, 319, 320, 321 verbunden, die ebenfalls gewichtet sind.

Die Zwischenneuronen 309, 310, 311 sind ferner mit weiteren gepulsten Neuronen 322, 323, 324 über gewichtete Verbindungen 325, 326, 327, 328, 329 und 330 verbunden.

Die gepulsten Neuronen weisen jeweils das oben beschriebene Verhalten auf, welches in [2] dargestellt ist.

Die Zwischenneuronen 309, 310, 311 sind mit mehreren Zwischenneuronen 309, 310, 311 verbunden, jeweils die weiteren gepulsten Neuronen 322, 323, 324 sind jeweils mit genau einem Zwischenneuron 309, 310, 311 verbunden. Auf diese Weise ist es möglich, eine lang reichende Beeinflussung zwischen Neuronen eines neuronalen Netzes sowie auch eine lokale Beeinflussung von Neuronen innerhalb des Neuronalen Netzes zu modellieren.

Mit den weiteren gepulsten Neuronen 322, 323, 324 ist ein Ausgangsneuron 331 über gewichtete Verbindungen 332, 333 und 334 verbunden. Von dem Ausgangsneuron 331 wird ein Ausgangssignal 335 gebildet, mit dem angegeben wird, welcher Klasse das Eingabemuster 306, 307, 308 zugehörig ist.

In der Trainingsphase des neuronalen Netzes 301 wird die Ausgangsgröße 335 mit der dem jeweiligen Eingabemuster zugeordneten Klassifikationsangabe verglichen und es wird ein Fehlersignal E gebildet, welches verwendet wird zur Anpassung der Gewichte, der in dem Neuronalen Netz 301 vorhandenen Verbindungen zwischen den Neuronen.

Als Trainingsverfahren wird im Rahmen dieses Ausführungsbeispiels das nicht gradientenbasierte Verfahren gemäß dem ALOPEX-Verfahren eingesetzt. Das Ziel des ALOPEX-Verfahrens ist die Minimierung eines Fehlermaßes E unter Berücksichtigung und Adaptierung der Gewichte $w_{bc}$ für einen Trainingsdatensatz.

Das ALOPEX-Verfahren wird im weiteren näher erläutert.

Ein Neuron b ist mit einem Neuron c über eine Verbindung verbunden, die mit dem Gewicht $w_{bc}$ gewichtet ist. Während einer f-ten Iteration wird das Gewicht $w_{bc}$ gemäß folgender Vorschrift aktualisiert:

$$w_{bc}(f) = w_{bc}(f-1) + \delta_{bc}(f), \tag{10}$$

wobei mit $\delta_{bc}(f)$ eine kleine positive oder negative vorgegebene Schrittweite $\delta$ gemäß folgender Vorschrift bezeichnet wird:

$$\delta_{bc}(f) = \begin{cases} -\delta & \text{mit einer Wahrscheinlichkeit } p_{bc}(f) \\ +\delta & \text{mit einer Wahrscheinlichkeit } 1 - p_{bc}(f) \end{cases} \tag{11}$$

Eine Wahrscheinlichkeit $p_{bc}(f)$ wird gebildet gemäß folgender Vorschrift:

$$p_{bc}(f) = \frac{1}{1 + e^{-\frac{C_{bc}(f)}{T(f)}}}, \tag{12}$$

wobei $C_{bc}(f)$ gemäß folgender Vorschrift gebildet wird:

$$C_{bc}(f) = \Delta w_{bc}(f) \cdot \Delta E(f). \tag{13}$$

Mit T(f) wird ein vorgebbarer Wert bezeichnet. Mit $\Delta w_{bc}(f)$ und $\Delta E(f)$ werden die Gewichtsänderungen $\Delta w_{bc}(f)$ der Gewichte $w_{bc}$ bzw. die Änderung $\Delta E(f)$ des Fehlermaßes E während der vorangegangenen zwei Iterationen bezeichnet gemäß folgenden Vorschriften:

$$\Delta w_{bc}(f) = w_{bc}(f-1) + w_{bc}(f-2), \tag{14}$$

$$\Delta E_{bc}(f) = E_{bc}(f-1) + E_{bc}(f-2). \tag{15}$$

Der vorgegebene Wert T(f) wird alle F Iterationen aktualisiert gemäß folgender Vorschrift:

$$T(f) = \frac{1}{FM} \sum_{b} \sum_{c} \sum_{f'=f-F}^{f-1} |C_{bc}(f')| \qquad (16)$$

wenn f ein ganzzahliges Vielfaches von F ist, und

$$T(f) = T(f-1) \qquad (17)$$

sonst,

wobei mit M eine Anzahl von Verbindungen in dem neuronalen Netz 301 bezeichnet wird.

Gleichung (16) kann vereinfacht werden zu folgender Vorschrift:

$$T(f) = \frac{\delta}{F} \sum_{f'=f-F}^{f-1} |\Delta E(f')| . \qquad (18)$$

Das neuronale Netz 301 wird unter Verwendung des Trainingsdatensatzes gemäß dem oben beschriebenen Trainingsverfahren trainiert.

Ferner wird ein erster Unterscheidungswert I(T) für das neuronale Netz 301 gemäß folgender Vorschrift gebildet:

$$I(T) = I\left( s; \begin{cases} t_1^{(1)}, \ldots, t_m^{(1)}, \ldots, t_{k_1}^{(1)}, t_1^{(2)}, \ldots, t_m^{(2)}, \ldots, t_{k_2}^{(2)}, \ldots, \\ t_1^{(n)}, \ldots, t_m^{(n)}, \ldots, t_{k_n}^{(n)}, \ldots, t_1^{(N)}, \ldots, t_m^{(N)}, \ldots, t_{k_N}^{(N)} \end{cases} \right), \qquad (19)$$

wobei mit

- s die Eingangsgrößen bezeichnet werden,
- $t^{(n)}_m$

$$t_m^{(n)}$$

ein Impuls bezeichnet wird, der von einem gepulsten Neuron n zu einem Zeitpunkt m innerhalb eines Zeitraums [0, T] generiert wird,
- mit $k_n$ (n = 1, ..., N) ein Zeitpunkt bezeichnet wird, zu dem das gepulste Neuron n den innerhalb des Zeitraums [0, T] letzten Impuls generiert hat,
- N eine Anzahl in dem Neuronalen Netz enthaltener gepulster Neuronen bezeichnet wird.

Der erste Unterscheidungswert I(T) entspricht anschaulich der Differenz folgender Entropien:

$$I(T) = H(out) - \langle H(out|s) \rangle_s, \qquad (20)$$

mit

$$H(out) = -\int p(out) \cdot \ln(p(out)) dt_1^{(1)} \dots dt_{k_1}^{(1)} \dots dt_{k_N}^{(N)} \qquad (21)$$

und

$$\langle H(out|s)\rangle_s = -\sum_{j=1}^{s} p_j \int p\left(out\middle|s^{(j)}\right) \cdot \ln\left(p\left(out\middle|s^{(j)}\right)\right) dt_1^{(1)} \dots dt_{k_1}^{(1)} \dots dt_{k_N}^{(N)} .$$

$$(22)$$

Damit ergibt sich der erste Unterscheidungswert I(T) gemäß folgender Vorschrift:

$$I(T) = -\int p(out) \cdot \ln(p(out)) dt_1^{(1)} \dots dt_{k_1}^{(1)} \dots dt_{k_N}^{(N)} +$$

$$+ \sum_{j=1}^{s} p_j \int p\left(out\middle|s^{(j)}\right) \cdot \ln\left(p\left(out\middle|s^{(j)}\right)\right) dt_1^{(1)} \dots dt_{k_1}^{(1)} \dots dt_{k_N}^{(N)} \qquad (23)$$

mit

$$p(out) = \sum_{j=1}^{s} p_j p\left(out\middle|s^{(j)}\right), \qquad (24)$$

wobei mit

- $s^{(j)}$ eine Eingangsgröße bezeichnet wird, die an das Neuronale Netz zu einem Zeitpunkt j angelegt wird,
- $p_j$ eine Wahrscheinlichkeit dafür bezeichnet wird, daß zu einem Zeitpunkt j die Eingangsgröße $s^{(j)}$ an das Neuronale Netz angelegt wird,
- 

$$p\left(out\middle|s^{(j)}\right)$$

eine bedingte Wahrscheinlichkeit dafür bezeichnet wird, ein Impuls von einem gepulsten Neuron in dem Neuronalen Netz generiert wird unter der Bedingung, daß zu einem Zeitpunkt j die Eingangsgröße $s^{(j)}$ an das Neuronale Netz angelegt wird.

Ist im Rahmen des Trainings des neuronalen Netzes 301 ein maximaler erster Unterscheidungswert I(T) ermittelt worden, so bedeutet dies, daß das in dem ersten Zeitraum beobachtete Eingangsmuster 306, 307, 308 genug Information enthält, um mit ausreichender Verläßlichkeit das Eingabemuster zu klassifizieren.

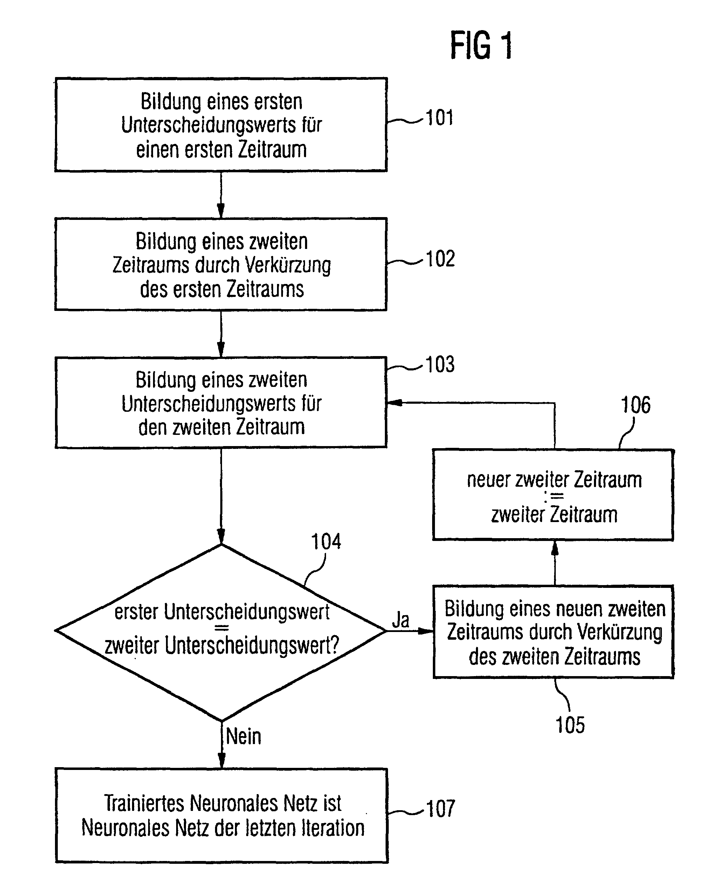

Anschaulich wird im Rahmen des Trainings für einen ersten Zeitraum [0; T] der erste Unterscheidungswert I(T) gebildet (Schritt 101) (vgl. **Fig.1**).

In einem weiteren Schritt (Schritt 102) wird ein zweiter Zeitraum durch Verkürzung des ersten Zeitraums gebildet: [0; T'], wobei T' < T.

Für den zweiten Zeitraum [0; T'] wird in einem weiteren Schritt (Schritt 103) ein zweiter Unterscheidungswert I(T') auf die gleiche, oben beschriebene Weise wie der erste Unterscheidungswert I(T) gebildet.

Der erste Unterscheidungswert I(T) wird mit dem zweiten Unterscheidungswert I(T') verglichen (Schritt 104).

Ist der zweite Unterscheidungswert I(T') gleich dem ersten Unterscheidungswert I(T), so wird ein neuer zweiter Zeitraum durch Verkürzung des zweiten Zeitraums [0; T'] gebildet (Schritt 105) und der neue zweite Zeitraum wird als der zweite Zeitraum angesehen (Schritt 106). Für den zweiten Zeitraum der neuen Iteration wird wiederum ein zweiter Unterscheidungswert I(T') (Schritt 103) gebildet.

Anschaulich bedeutet dieses iterative Verfahren, daß der Zeitraum, in dem von den gepulsten Neuronen generierte Impulse berücksichtigt werden zur Bildung des Ausgangssignals solange verkürzt wird, bis der zweite Unterscheidungswert I(T') ungleich dem ersten Unterscheidungswert I(T) ist.

Ist der zweite Unterscheidungswert I(T') kleiner als der erste Unterscheidungswert, so wird das neuronale Netz 301 als optimiertes neuronales Netz betrachtet, welches in der letzten vorangegangenen Iteration trainiert wurde, bei dem der zweite Unterscheidungswert I(T') nicht kleiner als der erste Unterscheidungswert I(T) war (Schritt 107).

Der jeweils berücksichtigte Zeitraum wird in diskrete Unterzeiträume unterteilt, für die jeweils lediglich ermittelt wird, ob während dieses Unterzeitraums ein Neuron einen Impuls generiert hat oder nicht.

Auf diese Weise wird der für das Training benötigte Rechenaufwand erheblich reduziert.

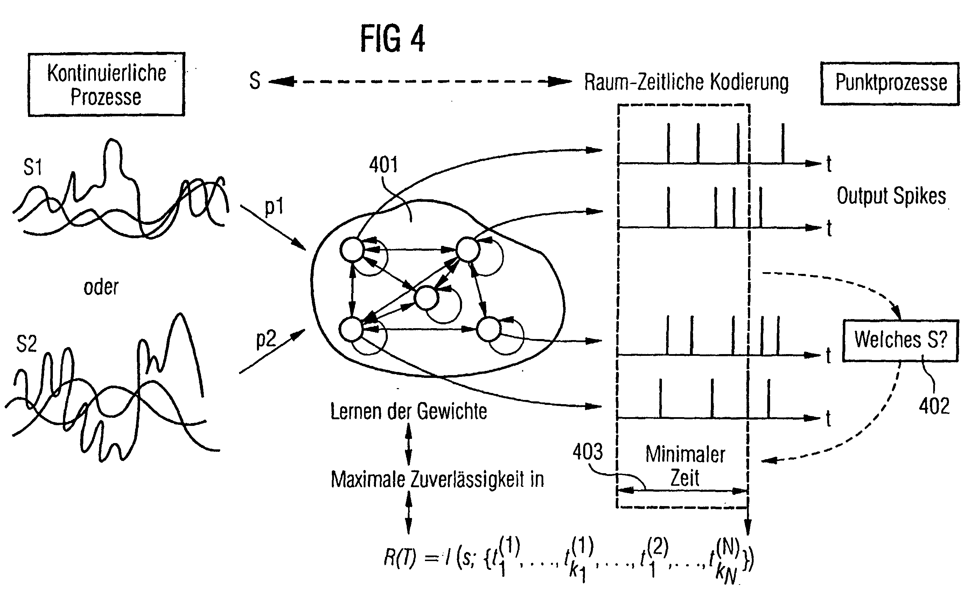

Zur weiteren Veranschaulichung wird das Prinzip anhand **Fig.4** noch einmal erläutert.

**Fig.4** zeigt zwei kontinuierliche Prozesse p1 und p2, die durch eine Menge von kontinuierlichen Eingangssignalen S1 und S2 gebildet sind. Nach entsprechender, oben beschriebener Digitalisierung liegen zwei Folgen von Eingangsgrößen vor, die Eingabemuster. Die Eingabemuster werden dem trainierten neuronalen Netz 401 in einer Anwendungsphase zugeführt, und es wird anhand der Zeitreihen für das trainierte neuronale Netz 401 anschaulich eine raum-zeitliche Codierung der Prozesse p1, p2 durchgeführt.

Anhand eines Ausgangssignals 402 wird durch das trainierte neuronale Netz 401 angegeben, um welche Art von Prozeß es sich bei dem Eingabemuster handelt. Das trainierte neuronale Netz 401 weist die Eigenschaft auf, daß zum einen die Zuverlässigkeit der Klassifikation optimiert ist und zum anderen eine minimale Anzahl von Zeitreihenwerten, also ein minimaler zweiter Zeitraum 403 erforderlich ist, um die Klassifikation verläßlich durchzuführen.

Im weiteren werden einige Alternativen zu dem oben beschriebenen Ausführungsbeispiel dargestellt:

Die Anzahl von Eingängen, gepulsten Neuronen sowie Ausgangssignalen ist im allgemeinen beliebig. Auch die Anzahl verschiedener Folgen von Zeitreihenwerten im Rahmen der Klassifikation sowie des Trainings ist beliebig. Damit ist eine Elektroencephalogramm-Analyse für eine beliebige Anzahl von Kanälen zur Tumorcharakterisierung möglich.

In diesem Dokument sind folgende Veröffentlichungen zitiert:

[1] G. Deco und B. Schürmann, Information Transmission and Temporal Code in Central Spiking Neurons, Physical Review Letters, Vol. 79, Nr. 23, S. 4697 - 4700, December 1997

[2] W. Gerstner, Time structure of the activity in neural network models, Physical Review E, Vol. 51, Nr. 1, S. 738 - 758, January 1995

[3] K.P. Unnikrishnan and K.P. Venugopal, Alopex: A Correlation-Based Learning Algorithm for Feedforward and Recurrent Neural Networks, S. 471 - 490, Neural Computation, Vol. 6, 1994

[4] DE 195 31 967 C2

[5] US-A-5 675 504

**Patentansprüche**

**1.** Verfahren zum Trainieren eines Neuronalen Netzes, welches gepulste Neuronen enthält,

a) bei dem für einen ersten Zeitraum ([0;T]) das Neuronale Netz derart trainiert wird, daß ein Unterscheidungswert maximiert wird, wodurch ein maximaler erster Unterscheidungswert gebildet wird,

b) bei dem der Unterscheidungswert abhängig ist von Impulsen, die von den gepulsten Neuronen innerhalb des ersten Zeitraums gebildet werden sowie von einer Trainings-Folge von Eingangsgrößen, die dem Neuronalen Netz zugeführt werden,

c) bei dem iterativ folgende Schritte durchgeführt werden:

- der erste Zeitraum wird zu einem zweiten Zeitraum verkürzt,
- für den zweiten Zeitraum wird ein zweiter Unterscheidungswert gebildet,
- ist der zweite Unterscheidungswert gleich dem ersten Unterscheidungswert, so erfolgt eine neue Iteration mit einem neuen zweiten Zeitraum, der durch Verkürzung des zweiten Zeitraums der vorangegangenen

**12**

Iteration gebildet wird,

- sonst wird das Verfahren beendet und das trainierte Neuronale Netz ist das Neuronale Netz der letzten Iteration, bei der der zweite Unterscheidungswert gleich dem ersten Unterscheidungswert ist.

**2.** Verfahren nach Anspruch 1,
bei dem zur Maximierung des ersten Unterscheidungswerts und/oder des zweiten Unterscheidungswerts ein nichtgradientenbasiertes Optimierungsverfahren eingesetzt wird.

**3.** Verfahren nach Anspruch 2,
bei dem das Optimierungsverfahren auf dem ALOPEX-Verfahren basiert.

**4.** Verfahren nach einem der Ansprüche 1 bis 3,
bei dem der erste Unterscheidungswert I(T) folgender Vorschrift genügt:

$$I(T) = I\left(s; \left\{ \begin{array}{l} t_1^{(1)}, \ldots, t_m^{(1)}, \ldots, t_{k_1}^{(1)}, t_1^{(2)}, \ldots, t_m^{(2)}, \ldots, t_{k_2}^{(2)}, \ldots, \\ t_1^{(n)}, \ldots, t_m^{(n)}, \ldots, t_{k_n}^{(n)}, \ldots, t_1^{(N)}, \ldots, t_m^{(N)}, \ldots, t_{k_N}^{(N)} \end{array} \right\} \right),$$

wobei mit

- s die Eingangsgrößen bezeichnet werden,
- $t^{(n)}_m$

$$t_m^{(n)}$$

ein Impuls bezeichnet wird, der von einem gepulsten Neuron n zu einem Zeitpunkt m innerhalb eines Zeitraums [0, T] generiert wird,
- $k_n$ (n = 1, ..., N) ein Zeitpunkt bezeichnet wird, zu dem das gepulste Neuron n den innerhalb des Zeitraums [0, T] letzten Impuls generiert hat,
- N eine Anzahl in dem Neuronalen Netz enthaltener gepulster Neuronen bezeichnet wird.

**5.** Verfahren nach Anspruch 4,
bei dem der erste Unterscheidungswert I(T) folgender Vorschrift genügt:

$$I(T) = -\int p(out) \cdot \ln(p(out)) dt_1^{(1)} \ldots dt_{k_1}^{(1)} \ldots dt_{k_N}^{(N)} +$$

$$+ \sum_{j=1}^{s} p_j \int p\left(out \middle| s^{(j)}\right) \cdot \ln\left(p\left(out \middle| s^{(j)}\right)\right) dt_1^{(1)} \ldots dt_{k_1}^{(1)} \ldots dt_{k_N}^{(N)}$$

mit

$$p(out) = \sum_{j=1}^{s} p_j p\left(out \middle| s^{(j)}\right),$$

wobei mit

- $s^{(j)}$ eine Eingangsgröße bezeichnet wird, die an das Neuronale Netz zu einem Zeitpunkt j angelegt wird,
- $p_j$ eine Wahrscheinlichkeit dafür bezeichnet wird, daß zu einem Zeitpunkt j die Eingangsgröße $s^{(j)}$ an das Neuronale Netz angelegt wird,
-

$$p\left(\text{out}\middle|s^{(j)}\right)$$

eine bedingte Wahrscheinlichkeit dafür bezeichnet wird, daß ein Impuls von einem gepulsten Neuron in dem Neuronalen Netz generiert wird unter der Bedingung, daß zu einem Zeitpunkt j die Eingangsgröße $s^{(j)}$ an das Neuronale Netz angelegt wird.

6. Verfahren nach einem der Ansprüche 1 bis 5,
bei dem die Trainings-Folge von Eingangsgrößen gemessene physikalische Signale sind.

7. Verfahren nach Anspruch 6,
bei dem die Trainings-Folge von Eingangsgrößen gemessene Signale eines Electroencephalogramms sind.

8. Verfahren zur Klassifikation einer Folge von Eingangsgrößen unter Verwendung eines Neuronalen Netzes, welches gepulste Neuronen enthält und gemäß folgenden Schritten trainiert worden ist:

a) für einen ersten Zeitraum wird das Neuronale Netz derart trainiert, daß ein Unterscheidungswert maximiert wird, wodurch ein maximaler erster Unterscheidungswert gebildet wird,
b) der Unterscheidungswert ist abhängig von Impulsen, die von den gepulsten Neuronen innerhalb des ersten Zeitraums gebildet werden sowie von einer Trainings-Folge von Eingangsgrößen, die dem Neuronalen Netz zugeführt werden,
c) iterativ werden folgende Schritte durchgeführt:

- der erste Zeitraum wird zu einem zweiten Zeitraum verkürzt,
- für den zweiten Zeitraum wird ein zweiter Unterscheidungswert gebildet,
- ist der zweite Unterscheidungswert gleich dem ersten Unterscheidungswert, so erfolgt eine neue Iteration mit einem neuen zweiten Zeitraum, der durch Verkürzung des zweiten Zeitraums der vorangegangenen Iteration gebildet wird,
- sonst wird das Verfahren beendet und das trainierte Neuronale Netz ist das Neuronale Netz der letzten Iteration, bei der der zweite Unterscheidungswert gleich dem ersten Unterscheidungswert ist,

- bei dem die Folge von Eingangsgrößen dem Neuronalen Netz zugeführt wird,
- bei dem ein Klassifikationssignal gebildet wird, mit dem angegeben wird, welcher Art einer Folge von Eingangsgrößen die zugeführte Folge ist.

9. Verfahren nach Anspruch 8,
bei dem die Trainings-Folge von Eingangsgrößen und die Folge von Eingangsgrößen gemessene physikalische Signale sind.

10. Verfahren nach Anspruch 9,
bei dem die Trainings-Folge von Eingangsgrößen und die Folge von Eingangsgrößen gemessene Signale eines Electroencephalogramms sind.

11. Neuronales Netz, welches gepulste Neuronen enthält und gemäß folgenden Schritten trainiert worden ist:

a) für einen ersten Zeitraum wird das Neuronale Netz derart trainiert, daß ein Unterscheidungswert maximiert wird, wodurch ein maximaler erster Unterscheidungswert gebildet wird,
b) der Unterscheidungswert ist abhängig von Impulsen, die von den gepulsten Neuronen innerhalb des ersten Zeitraums gebildet werden sowie von einer Trainings-Folge von Eingangsgrößen, die dem Neuronalen Netz zugeführt werden,
c) iterativ werden folgende Schritte durchgeführt:

- der erste Zeitraum wird zu einem zweiten Zeitraum verkürzt,
- für den zweiten Zeitraum wird ein zweiter Unterscheidungswert gebildet,

- ist der zweite Unterscheidungswert gleich dem ersten Unterscheidungswert, so erfolgt eine neue Iteration mit einem neuen zweiten Zeitraum, der durch Verkürzung des zweiten Zeitraums der vorangegegangenen Iteration gebildet wird,
- sonst wird das Verfahren beendet und das trainierte Neuronale Netz ist das Neuronale Netz der letzten Iteration, bei der der zweite Unterscheidungswert gleich dem ersten Unterscheidungswert ist.

12. Neuronales Netz nach Anspruch 10, eingesetzt zur Klassifikation eines physikalischen Signals.

13. Neuronales Netz nach Anspruch 10, eingesetzt zur Klassifikation eines Signals eines Electroencephalogramms.

14. Anordnung zum Trainieren eines Neuronalen Netzes, welches gepulste Neuronen enthält,
mit einem Prozessor, der derart eingerichtet ist, daß folgende Schritte durchführbar sind:

a) für einen ersten Zeitraum wird das Neuronale Netz derart trainiert, daß ein Unterscheidungswert maximiert wird, wodurch ein maximaler erster Unterscheidungswert gebildet wird,
b) der Unterscheidungswert ist abhängig von Impulsen, die von den gepulsten Neuronen innerhalb des ersten Zeitraums gebildet werden sowie von einer Trainings-Folge von Eingangsgrößen, die dem Neuronalen Netz zugeführt werden,
c) iterativ werden folgende Schritte durchgeführt:

- der erste Zeitraum wird zu einem zweiten Zeitraum verkürzt,
- für den zweiten Zeitraum wird ein zweiter Unterscheidungswert gebildet,
- ist der zweite Unterscheidungswert gleich dem ersten Unterscheidungswert, so erfolgt eine neue Iteration mit einem neuen zweiten Zeitraum, der durch Verkürzung des zweiten Zeitraums der vorangegegangenen Iteration gebildet wird,
- sonst wird das Verfahren beendet und das trainierte Neuronale Netz ist das Neuronale Netz der letzten Iteration, bei der der zweite Unterscheidungswert gleich dem ersten Unterscheidungswert ist.

15. Anordnung nach Anspruch 14, eingesetzt zur Klassifikation eines physikalischen Signals.

16. Anordnung nach Anspruch 14, eingesetzt zur Klassifikatikation eines Signals eines Electroencephalogramms.

**Claims**

1. Method for training a neural network which contains pulsed neurons,

a) in which the neural network is trained for a first period ([0;T]) in such a way that a discrimination value is maximized with the result that a maximum first discrimination value is formed,
b) in which the discrimination value is a function of pulses which are formed by the pulsed neurons within the first period, and of a training sequence of input variables which are fed to the neural network,
c) in which the following steps are carried out iteratively:

- the first period is shortened to a second period,
- a second discrimination value is formed for the second period,
- if the second discrimination value is equal to the first discrimination value, a new iteration is performed with a new second period which is formed by shortening the second period of the preceding iteration, and
- otherwise the method is terminated and the trained neural network is the neural network of the last iteration in which the second discrimination value is equal to the first discrimination value.

2. Method according to Claim 1, in which a non-gradient-based optimization method is used to maximize the first discrimination value and/or the second discrimination value.

3. Method according to Claim 2, in which the optimization method is based on the ALOPEX method.

4. Method according to one of Claims 1 to 3, in which the first discrimination value I(T) satisfies the following rule:

$$I(T) = I\left(s; \left\{ \begin{array}{l} t_1^{(1)}, \ldots, t_m^{(1)}, \ldots, t_{k_1}^{(1)}, t_1^{(2)}, \ldots, t_m^{(2)}, \ldots, t_{k_2}^{(2)}, \ldots, \\ t_1^{(n)}, \ldots, t_m^{(n)}, \ldots, t_{k_n}^{(n)}, \ldots, t_1^{(N)}, \ldots, t_m^{(N)}, \ldots, t_{k_N}^{(N)} \end{array} \right\}\right),$$

where

- s denotes the input variables,
- $t_m^{(n)}$ denotes a pulse which is generated by a pulsed neuron n at an instant m within a period [0, T],
- $k_n$ (n = 1, ..., N) denotes an instant at which the pulsed neuron n has generated the last pulse within the period [0, T], and
- N denotes a number of pulsed neurons contained in the neural network.

5. Method according to Claim 4, in which the first discrimination value I(T) satisfies the following rule:

$$I(T) = -\int p(out) \cdot \ln(p(out)) dt_1^{(1)} \ldots dt_{k_1}^{(1)} \ldots dt_{k_N}^{(N)} +$$

$$+ \sum_{j=1}^{s} pj \int p\left(out | s^{(j)}\right) \cdot \ln\left(p\left(out | s^{(j)}\right)\right) dt_1^{(1)} \ldots dt_{k_1}^{(1)} \ldots dt_{k_N}^{(N)}$$

where

$$p(out) = \sum_{j=1}^{s} pj\, p\left(out | s^{(j)}\right)$$

where

- $s^{(j)}$ denotes an input variable which is applied to the neural network at an instant j,
- $p_j$ denotes a probability that the input variable $s^{(j)}$ is applied to the neural network at an instant j,
- 
$$p\left(out | s^{(j)}\right)$$

denotes a conditional probability that a pulse is generated by a pulsed neuron in the neural network under the condition that the input variable $s^{(j)}$ is applied to the neural network at an instant j.

6. Method according to one of Claims 1 to 5, in which the training sequence of input variables are measured physical signals.

7. Method according to Claim 6, in which the training sequence of input variables are measured signals of an electroencephalogram.

8. Method for classifying a sequence of input variables by using a neural network which contains pulsed neurons and has been trained in accordance with the following steps:

 a) the neural network is trained for a first period in such a way that a discrimination value is maximized, as a result of which a maximum first discrimination value is formed,
 b) the discrimination value is a function of pulses which are formed by the pulsed neurons within the first period, and of a training sequence of input variables which are fed to the neural network,
 c) the following steps are carried out iteratively:

 - the first period is shortened to a second period,
 - a second discrimination value is formed for the second period,

- if the second discrimination value is equal to the first discrimination value, a new iteration is performed with a new second period which is formed by shortening the second period of the preceding iteration, and
- otherwise the method is terminated and the trained neural network is the neural network of the last iteration in which the second discrimination value is equal to the first discrimination value,

- in which the sequence of input variables is fed to the neural network and
- in which a classification signal is formed with the aid of which it is specified which type of sequence of input variables the fed sequence is.

9. Method according to Claim 8, in which the training sequence of input variables and the sequence of input variables are measured physical signals.

10. Method according to Claim 9, in which the training sequence of input variables and the sequence of input variables are measured signals of an electroencephalogram.

11. Neural network which contains pulsed neurons and has been trained in accordance with the following steps:

a) the neural network is trained for a first period in such a way that a discrimination value is maximized, as a result of which a maximum first discrimination value is formed,
b) the discrimination value is a function of pulses which are formed by the pulsed neurons within the first period, and of a training sequence of input variables which are fed to the neural network,
c) the following steps are carried out iteratively:

- the first period is shortened to a second period,
- a second discrimination value is formed for the second period,
- if the second discrimination value is equal to the first discrimination value, a new iteration is performed with a new second period which is formed by shortening the second period of the preceding iteration, and
- otherwise the method is terminated and the trained neural network is the neural network of the last iteration in which the second discrimination value is equal to the first discrimination value.

12. Neural network according to Claim 10, which is used for classifying a physical signal.

13. Neural network according to Claim 10, which is used for classifying a signal of an electroencephalogram.

14. Arrangement for training a neural network which contains pulsed neurons, having a processor which is set up in such a way that the following steps can be carried out:

a) the neural network is trained for a first period in such a way that a discrimination value is maximized, as a result of which a maximum first discrimination value is formed,
b) the discrimination value is a function of pulses which are formed by the pulsed neurons within the first period, and of a training sequence of input variables which are fed to the neural network,
c) the following steps are carried out iteratively:

- the first period is shortened to a second period,
- a second discrimination value is formed for the second period,
- if the second discrimination value is equal to the first discrimination value, a new iteration is performed with a new second period which is formed by shortening the second period of the preceding iteration, and
- otherwise the method is terminated and the trained neural network is the neural network of the last iteration in which the second discrimination value is equal to the first discrimination value.

15. Arrangement according to Claim 14, which is used for classifying a physical signal.

16. Arrangement according to Claim 14, which is used for classifying a signal of an electroencephalogram.

**Revendications**

1. Procédé destiné à entraîner un réseau neuronal, qui renferme des neurones impulsionnels,

a) dans lequel, pendant un premier espace de temps ([0; T]), le réseau neuronal est entraîné de telle manière qu'une valeur de discrimination est maximisée, ce qui a pour effet qu'une première valeur maximum de discrimination est formée,

b) dans lequel la valeur de discrimination dépend d'impulsions, qui sont formées par les neurones impulsionnels au cours du premier espace de temps, ainsi que d'une séquence d'entraînement de grandeurs d'entrée, qui sont appliquées au réseau neuronal,

c) dans lequel les étapes suivantes sont exécutées itérativement:

- le premier espace de temps est raccourci pour donner un deuxième espace de temps,
- pour le deuxième espace de temps, on forme une deuxième valeur de discrimination,
- si la deuxième valeur de discrimination est égale à la première valeur de discrimination, on procède à une nouvelle itération avec un nouveau deuxième espace de temps, qui est formé en raccourcissant le deuxième espace de temps de l'itération précédente,
- sinon, le processus est terminé et le réseau neuronal entraîné est le réseau neuronal de la dernière itération, dans laquelle la deuxième valeur de discrimination était égale à la première valeur de discrimination.

**2.** Procédé selon la revendication 1

dans lequel, pour la maximisation de la première valeur de discrimination et/ou de la deuxième valeur de discrimination, on met en oeuvre un procédé d'optimisation qui n'est pas basé sur un gradient.

**3.** Procédé selon la revendication 2

dans lequel le procédé d'optimisation repose sur le procédé ALOPEX.

**4.** Procédé selon l'une des revendications 1 à 3

dans lequel la première valeur de discrimination I(T) satisfait à la règle suivante:

$$I(T) = I\left(s; \begin{cases} t_1^{(1)}, \ldots, t_m^{(1)}, \ldots, t_{k_1}^{(1)}, t_1^{(2)}, \ldots, t_m^{(2)}, \ldots, t_{k_2}^{(2)}, \ldots, \\ t_1^{(n)}, \ldots, t_m^{(n)}, \ldots, t_{k_n}^{(n)}, \ldots, t_1^{(N)}, \ldots, t_m^{(N)}, \ldots, t_{k_N}^{(N)} \end{cases}\right)$$

dans laquelle

- $s$ désigne les grandeurs d'entrée,
- $t_m^{(n)}$ désigne une impulsion, qui est générée par un neurone impulsionnel n à un instant m à l'intérieur d'un espace de temps [0, T],
- $k_n$ (n = 1, ..., N) désigne un instant auquel le neurone impulsionnel n a généré la dernière impulsion à l'intérieur de l'espace de temps [0, T],
- N désigne un nombre de neurones impulsionnels contenus dans le réseau neuronal.

**5.** Procédé selon la revendication 4

dans lequel la première valeur de discrimination I(T) satisfait à la règle suivante:

$$I(T) = -\int p(out) \cdot \ln(p(out))dt_1^{(1)} \ldots dt_{k_1}^{(1)} \ldots dt_{k_N}^{(N)} +$$

$$+ \sum_{j=1}^{S} p_j \int p\left(out \middle| s^{(j)}\right) \cdot \ln\left(p\left(out \middle| s^{(j)}\right)\right)dt_1^{(1)} \ldots dt_{k_1}^{(1)} \ldots dt_{k_N}^{(N)}$$

avec

$$p(\text{out}) = \sum_{j=1}^{s} p_j p\left(\text{out}\middle|s^{(j)}\right),$$

dans lesquelles

- $s^{(j)}$ désigne une grandeur d'entrée, qui est appliquée au réseau neuronal à un instant j,
- $p_j$ désigne une probabilité avec laquelle la grandeur d'entrée $s^{(j)}$ est appliquée au réseau neuronal à un instant j,
-

$$p\left(\text{out}\middle|s^{(j)}\right)$$

désigne une probabilité conditionnée avec laquelle une impulsion d'un neurone impulsionnel est générée dans le réseau neuronal à condition qu'à un instant j, la grandeur d'entrée $s^{(j)}$ soit appliquée au réseau neuronal.

6. Procédé selon l'une des revendications 1 à 5
   dans lequel les grandeurs d'entrée de la séquence d'entraînement sont des signaux physiques mesurés.

7. Procédé selon la revendication 6
   dans lequel les grandeurs d'entrée de la séquence d'entraînement sont des signaux mesurés d'un électroencéphalogramme.

8. Procédé destiné à la classification d'une séquence de grandeurs d'entrée utilisant un réseau neuronal, qui renferme des neurones impulsionnels et qui est entraîné conformément aux étapes suivantes:

   a) pendant un premier espace de temps, le réseau neuronal est entraîné de telle manière qu'une valeur de discrimination est maximisée, si bien qu'une première valeur maximum de discrimination est formée,
   b) la valeur de discrimination dépend d'impulsions, qui sont formées par les neurones impulsionnels pendant le premier espace de temps, ainsi que d'une séquence d'entraînement de grandeurs d'entrée, qui sont appliquées au réseau neuronal,
   c) les étapes suivantes sont exécutées d'une façon itérative:

   - le premier espace de temps est raccourci pour donner un deuxième espace de temps,
   - pour le deuxième espace de temps, on forme une deuxième valeur de discrimination,
   - si la deuxième valeur de discrimination est égale à la première valeur de discrimination, on procède à une nouvelle itération avec un nouveau deuxième espace de temps, qui est formé en raccourcissant le deuxième espace de temps de l'itération précédente,
   - sinon, le processus est terminé et le réseau neuronal entraîné est le réseau neuronal de la dernière itération, dans laquelle la deuxième valeur de discrimination était égale à la première valeur de discrimination,

   - dans lequel la séquence de grandeurs d'entrée est appliquée au réseau neuronal,
   - dans lequel est formé un signal de classification par lequel est indiqué de quelle sorte de séquence de grandeurs d'entrée est la séquence appliquée.

9. Procédé selon la revendication 8
   dans lequel les grandeurs d'entrée de la séquence d'entraînement et de la séquence d'application sont des signaux physiques mesurés.

10. Procédé selon la revendication 9
    dans lequel les grandeurs d'entrée de la séquence d'entraînement et de la séquence d'application sont des signaux mesurés d'un encéphalogramme.

11. Réseau neuronal, qui renferme des neurones impulsionnels et qui a été entraîné conformément aux étapes suivantes:

a) pendant un premier espace de temps, le réseau neuronal est entraîné de telle manière qu'une valeur de discrimination est maximisée, si bien qu'une première valeur maximum de discrimination est formée,

b) la valeur de discrimination dépend d'impulsions, qui sont formées par les neurones impulsionnels pendant le premier espace de temps, ainsi que d'une séquence d'entraînement de grandeurs d'entrée, qui sont appliquées au réseau neuronal,

c) les étapes suivantes sont exécutées d'une façon itérative:

- le premier espace de temps est raccourci pour donner un deuxième espace de temps,
- pour le deuxième espace de temps, on forme une deuxième valeur de discrimination,
- si la deuxième valeur de discrimination est égale à la première valeur de discrimination, on procède à une nouvelle itération avec un nouveau deuxième espace de temps, qui est formé en raccourcissant le deuxième espace de temps de l'itération précédente,
- sinon, le processus est terminé et le réseau neuronal entraîné est le réseau neuronal de la dernière itération, dans laquelle la deuxième valeur de discrimination était égale à la première valeur de discrimination.

12. Réseau neuronal selon la revendication 10 mis en oeuvre pour la classification d'un signal physique.

13. Réseau neuronal selon la revendication 10 mis en oeuvre pour la classification d'un signal d'un encéphalogramme.

14. Configuration destinée à l'entraînement d'un réseau neuronal, qui renferme des neurones impulsionnels, comportant un processeur conçu de telle sorte que les étapes suivantes peuvent être exécutées:

a) pendant un premier espace de temps, le réseau neuronal est entraîné de telle manière qu'une valeur de discrimination est maximisée, si bien qu'une première valeur maximum de discrimination est formée,

b) la valeur de discrimination dépend d'impulsions, qui sont formées par les neurones impulsionnels pendant le premier espace de temps, ainsi que d'une séquence d'entraînement de grandeurs d'entrée, qui sont appliquées au réseau neuronal,

c) les étapes suivantes sont exécutées d'une façon itérative:

- le premier espace de temps est raccourci pour donner un deuxième espace de temps,
- pour le deuxième espace de temps, on forme une deuxième valeur de discrimination,
- si la deuxième valeur de discrimination est égale à la première valeur de discrimination, on procède à une nouvelle itération avec un nouveau deuxième espace de temps, qui est formé en raccourcissant le deuxième espace de temps de l'itération précédente,
- sinon, le processus est terminé et le réseau neuronal entraîné est le réseau neuronal de la dernière itération, dans laquelle la deuxième valeur de discrimination était égale à la première valeur de discrimination.

15. Configuration selon la revendication 14 mise en oeuvre pour la classification d'un signal physique.

16. Configuration selon la revendication 14 mise en oeuvre pour la classification d'un signal d'un encéphalogramme.

# FIG 1

Bildung eines ersten
Unterscheidungswerts für
einen ersten Zeitraum —101

Bildung eines zweiten
Zeitraums durch Verkürzung
des ersten Zeitraums —102

Bildung eines zweiten
Unterscheidungswerts für
den zweiten Zeitraum —103

neuer zweiter Zeitraum
$:=$
zweiter Zeitraum —106

erster Unterscheidungswert
$=$
zweiter Unterscheidungswert? —104

Ja → Bildung eines neuen zweiten
Zeitraums durch Verkürzung
des zweiten Zeitraums —105

Nein

Trainiertes Neuronales Netz ist
Neuronales Netz der letzten Iteration —107

FIG 2

# FIG 3

# FIG 4

Kontinuierliche Prozesse

S ⟷ Raum-Zeitliche Kodierung

Punktprozesse

S1

oder

S2

p1

p2

401

Lernen der Gewichte

Maximale Zuverlässigkeit in

Output Spikes

Welches S?

402

403 Minimaler Zeit

$$R(T) = I\left(s; \{t_1^{(1)}, \ldots, t_{k_1}^{(1)}, \ldots, t_1^{(2)}, \ldots, t_{k_N}^{(N)}\}\right)$$

EP 1 114 398 B1